# EUROPÄISCHE PATENTSCHRIFT

(11) **EP 0 589 525 B1**
(45) Veröffentlichungstag und Bekanntmachung des Hinweises auf die Patenterteilung: **22.01.1997**
(21) Anmeldenummer: 93202702.2
(22) Anmeldetag: 17.09.1993
(51) Int. Cl.: H02P 7/622

(54) **Schaltungsanordnung zum Speisen eines Zweiphasen-Asynchronmotors**
Switching device for driving an asynchronous two-phase motor
Dispositif de commutation alimentant un moteur asynchrone à deux phases

(30) Priorität: 25.09.1992 DE 4232134
(43) Veröffentlichungstag der Anmeldung: 30.03.1994
(73) Patentinhaber: Philips Patentverwaltung GmbH, 22335 Hamburg (DE); Philips Electronics N.V., 5621 BA Eindhoven (NL)
(72) Erfinder: van der Broeck, Heinz, Dr., D-20097 Hamburg (DE)
(74) Vertreter: Peters, Carl Heinrich, Dipl.-Ing.

(56) Entgegenhaltungen:
- EP-A- 0 499 470
- EP-A- 0 501 634
- US-A- 4 459 535
- US-A- 4 829 551

## Beschreibung

Die Erfindung bezieht sich auf eine Schaltungsanordnung zum Speisen eines Zweiphasen-Asynchronmotors mit zwei Wicklungen, die einerseits mit je einem und andererseits gemeinsam mit einem dritten Anschlußpunkt verbunden sind, wobei den Anschlußpunkten je eine von drei in der Frequenz ihrer sinusförmigen Grundschwingungen wenigstens weitgehend übereinstimmenden Wechselspannungen zuführbar ist.

Aus der US-PS 4 829 551 ist ein Zweiphasenantrieb für eine Drehanode einer Röntgenröhre bekannt, der einen Stator mit zwei Wicklungen aufweist: Eine Hauptwicklung und eine Hilfswicklung. Die Hauptwicklung und die Hilfswicklung sind mit drei Anschlußpunkten verbunden, von denen einer beiden Wicklungen gemeinsam ist. Die drei Anschlußpunkte werden mit einem Hauptsignal, einem gemeinsamen Signal bzw. einem Hilfssignal betrieben und sind dazu mit Schaltkreisen zum Zuführen dieser Signale verbunden. Diese Schaltkreise enthalten gemäß der US-PS 4 829 551 Darlington-Transistoren.

Aus dem Aufsatz "Phase-Difference Control of Ziffer 2 - Phase Inverter-Fred Induction Motor", CH 2721-9/89/000-0571 (1989) IEEE von Jang, Chr., Kim und Won wird die Speisung eines Motors mit Sinusspannungen nachbildenden, pulsweitenmodulierten Rechteckspannungen angegeben.

Die Schaltkreise zum Zuführen der Wechselspannungen an die Anschlußpunkte werden bei einem Betrieb eines Zweiphasen-Asynchronmotors unterschiedlich stark belastet in der Weise, daß der mit dem dritten Anschlußpunkt verbundene Schaltkreis die stärkste Belastung aufzunehmen hat, wogegen die mit den ersten beiden Anschlußpunkten verbundenen Schaltkreise je nach der Dimensionierung der angeschlossenen Wicklungen verschieden, aber geringfügiger belastet werden. Diese unterschiedliche Belastung äußert sich in unterschiedlich hohen Verlustleistungen in den Schaltkreisen, wobei die Verlustleistung in dem mit dem dritten Anschlußpunkt verbundenen Schaltkreis durch den von diesem zuführenden, höheren Strom am größten ist. Diese Verluste sind nicht nur bei linearer Speisung mit sinsuförmigen Wechselspannungen gegeben, sondern treten auch bei Speisung mit pulsweitenmodulierten Rechteckspannungen auf, und zwar in diesem letzteren Fall im wesentlichen während der Umschaltvorgänge. Bei einer derartigen Speisung müssen somit die einzelnen Schaltkreise für unterschiedliche Verlustleistungen ausgelegt werden.

Andererseits sind Standardbauteile verfügbar, in denen drei Schaltkreise zum Speisen der drei Wicklungsanschlüsse dreiphasiger Asynchronmotoren zusammengefaßt sind. Die einzelnen Schaltkreise dieser Standardbauteile sind vorzugsweise identisch dimensioniert. Wenn nun aus Kostengründen für den Aufbau einer Schaltungsanordnung der eingangs genannten Art ein derartiges Standardbauteil verwendet werden soll, muß dessen gesamte Dimensionierung auf die Belastung des mit dem dritten Anschlußpunkt verbundenen Schaltkreises ausgelegt werden. Die beiden übrigen Schaltkreise sind dann überdimensioniert; die Konstruktion ist insgesamt nicht wirtschaftlich. Gerade bei Geräten, die in großen Stückzahlen zu niedrigen Preisen gefertigt werden sollen, wäre somit der Einbau eines derartigen Schaltkreises nachteilig.

Die Erfindung hat die Aufgabe, eine Schaltungsanordnung der eingangs genannten Art in der Weise auszubilden, daß die Verlustleistung in dem mit dem dritten Anschlußpunkt verbundenen Schaltkreis soweit verringert werden kann, daß dadurch eine sparsamere Dimensionierung ermöglicht wird, ohne die Betriebstauglichkeit, insbesondere die Belastbarkeit, einzuschränken.

Diese Aufgabe wird erfindungsgemäß dadurch gelöst, daß die dem dritten Anschlußpunkt zuzuführende Wechselspannung in vorgebbaren, periodisch wiederkehrenden Zeitintervallen konstante Pegel annimmt.

Eine derartige Speisung des dritten Anschlußpunktes bedeutet, daß der grundsätzlich vorgesehene zeitliche Verlauf der dem dritten Anschlußpunkt zuzuführenden Wechselspannung, der wenigstens weitgehend dem zeitlichen Verlauf der Wechselspannungen an den beiden anderen Anschlußpunkten entspricht, in den vorgebbaren Zeitintervallen zugunsten der Einnahme konstanter Spannungspegel unterbrochen wird. Bei der Speisung aus einer Gleichspannungsquelle werden diese Pegel bevorzugt den Spannungen der Pole dieser Gleichspannungsquelle entsprechen.

Bei einer ansonsten linearen, sinusförmigen Speisung der Anschlußpunkte der Wicklungen bedeutet die erfindungsgemäße Ausbildung der zeitlichen Verläufe der Wechselspannungen, daß der sinusförmige Verlauf der Wechselspannung am dritten Anschlußpunkt in den genannten Zeitintervallen, die periodisch vorzugsweise mit der Frequenz der sinsuförmigen Wechselspannungen auftreten, unterbrochen wird und daß stattdessen die Wechselspannung am dritten Anschlußpunkt während dieses Zeitintervalls den konstanten Pegel vorzugsweise von einem der Pole der speisenden Gleichspannungsquelle annimmt. Dies ist damit verbunden, daß der Schaltkreis für die den dritten Anschlußpunkt speisende Wechselspannung niederohmig und somit verlustarm wird. Damit wird die Verlustleistung in den genannten Zeitintervallen stark vermindert und im zeitlichen Mittel soweit herabgesetzt, daß sie mit den Verlustleistungen in den beiden anderen Schaltkreisen vergleichbar wird, wodurch eine entsprechend verringerte Dimensionierung dieser Schaltkreise möglich ist.

Bei einer Ausbildung der Wechselspannungen im wesentlichen als pulsweitenmodulierte Rechteckspannungen nimmt die dem dritten Anschlußpunkt zuzuführende Wechselspannung in dem vorgebbaren, periodisch wiederkehrenden Zeitintervallen ebenfalls die Pulsweitenmodulation unterbrechende, konstante Pegel an, die ebenfalls den Spannungen an den Polen einer zur Speisung herangezogenen Gleichspannungsquelle entsprechen können. Dadurch werden in diesen Zeitintervallen die verlustbehafteten Schaltvorgänge eingespart und auch bei dieser Speisungsform die Verluste in den Schaltkreisen gesenkt. Vorzugsweise entsprechen dabei die konstanten Pegel den Spitzenwerten der pulsweitenmodulierten Rechteckspannungen. Insbesondere entsprechen auch die Spitzenwerte der pulsweitenmodulierten Rechteckspannungen dabei den Spannungen an den Polen der Gleichspannungsquelle in der für die Pulsweitenmodulation üblichen Weise.

Besonders günstige Bedingungen für die Speisung des Zweiphasen-Asynchronmotors werden dadurch erhalten, daß die dem dritten Anschlußpunkt zuzuführende Wechselspannung einen positiven bzw. negativen konstanten Pegel in den Zeitintervallen annimmt, in denen die sinusförmige Grundschwingung der Wechselspannung am dritten Anschlußpunkt größer bzw. kleiner ist als die sinusförmigen Grundschwingungen der Wechselspannungen an den beiden anderen Anschlußpunkten. Die erfindungsgemäße Ausbildung der dem dritten Anschlußpunkt zuzuführenden Wechselspannung ist nach dieser Ausgestaltung der Erfindung für alle beschriebenen zeitlichen Verläufe der Wechselspannungen in problemloser Weise möglich. Dies wird insbesondere dann deutlich, wenn nach einer anderen Fortbildung der Erfindung den beiden ersten Anschlußpunkten zuzuführenden Wechselspannungen je eine Verzerrungsspannung überlagert ist, die der durch die Einfügung konstanter Pegel in die dem dritten Anschlußpunkt zuzuführenden Spannung hervorgerufenen Veränderung des Spannungsverlaufs derart entspricht, daß der Einfluß dieser Veränderung auf die an die Wicklungen anzulegenden Spannungen kompensiert ist. Durch diese Verzerrungsspannungen wird sichergestellt, daß die Spannungsverläufe an den Wicklungen gegenüber dem herkömmlichen Fall der Speisung in ihren zeitlichen Verläufen unverändert bleiben, so daß die erfindungsgemäße Speisung keinerlei Einfluß auf den Motor und das von ihm betriebene Gerät ausüben kann. Durch die Verzerrungsspannungen kann jedoch die Amplitude der den beiden ersten Anschlußpunkten zuzuführenden Wechselspannungen stark vergrößert werden, obgleich die Amplitude ihrer Grundschwingungen unverändert bleibt. Bei der vorstehend beschriebenen Bemessung der Zeitintervalle des Anlegens konstanter Pegel an den dritten Anschlußpunkt wird jedoch sichergestellt, daß die Amplituden der den ersten beiden Anschlußpunkten zuzuführenden Wechselspannungen die Amplitude der dem dritten Anschlußpunkt zuzuführenden Wechselspannung nicht übersteigt. Damit ist es in einfacher Weise möglich, alle drei Wechselspannungen auch bei der erfindungsgemäßen Speisung beispielsweise aus einer gemeinsamen Gleichspannungsquelle abzuleiten, deren Pole den konstanten Pegeln entsprechende Spannungen führen. Insgesamt wird somit ein erhöhter Spannungsbedarf vermieden, der einerseits mit erhöhtem Aufwand gesondert erzeugt werden müßte und andererseits zusätzliche Isolationsprobleme am Motor schaffen könnte, wobei außerdem berücksichtigt werden müßte, daß auch die zur Speisung herangezogene Schaltungsanordnung eine entsprechend erhöhte Spannungsfestigkeit aufweisen müßte.

Vorteilhaft sind die den beiden ersten Anschlußpunkten zuzuführenden Wechselspannungen bezüglich ihrer sinusförmigen Grundschwingung gegenphasig und ist der Phasenwinkel der dem dritten Anschlußpunkt zuzführenden Wechselspanung demgegenüber beliebig vorgebbar. Über den vorgebbaren Phasenwinkel kann dann das Amplitudenverhältnis der Spannungen an den Wicklungen des Zweiphasen-Asychronmotors in einfacher Weise eingestellt werden und ist somit unterschiedlichen Betriebsweisen oder Konstruktionsformen derartiger Motoren sehr leicht anpaßbar. Somit lassen sich Motoren mit beliebiger Asymmetrie zwischen einer Hauptwicklung und einer Hilfswicklung mit geringem technischen Aufwand betreiben, wobei zwischen den Spannungen an diesen Wicklungen stets ein Phasenwinkel von 90° vorliegt.

Ausführungsbeispiele zur Erläuterung der Erfindung sind in der Zeichnung dargestellt. Es zeigen:
Fig. 1 ein Schaltschema für ein Beispiel einer Speisung eines Zweiphasen-Asynchronmotors,
Fig. 2 zeitliche Verläufe von Spannungen an einem Zweiphasen-Asynchronmotor bei einer Speisung mit Spannungen mit linearen, sinusförmigen Grundschwingungen und
Fig. 3 Spannungsverläufe an einem Zweiphasen-Asynchronmotor bei einer Speisung mit pulsweitenmodulierten Rechteckspannungen.

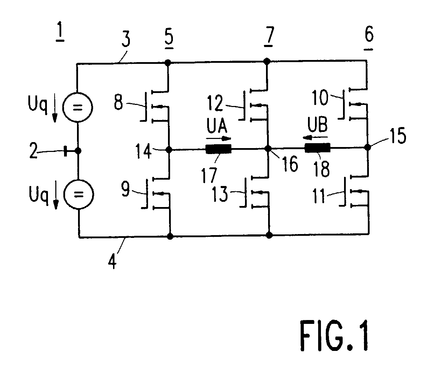

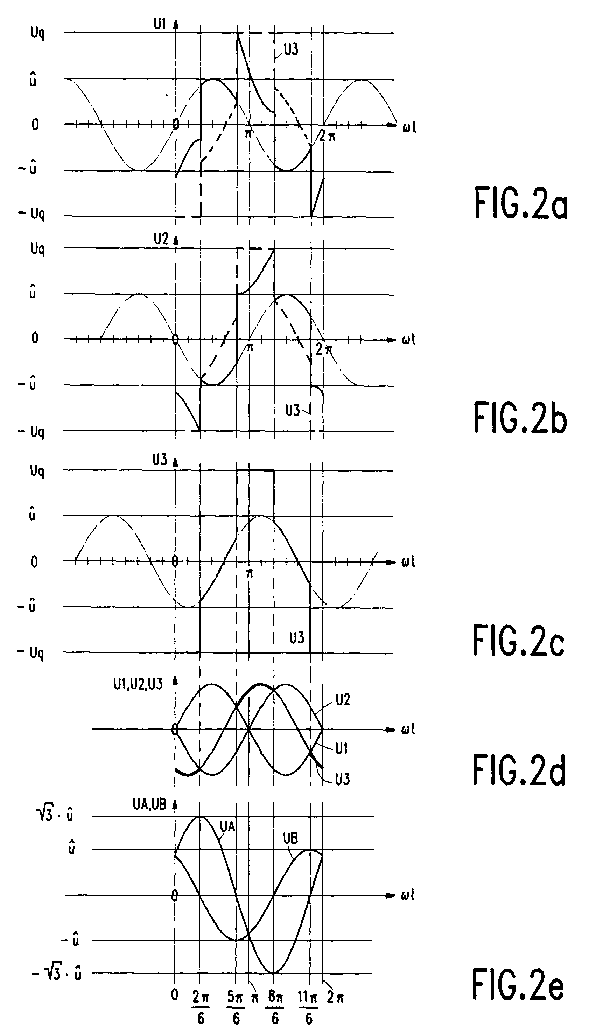

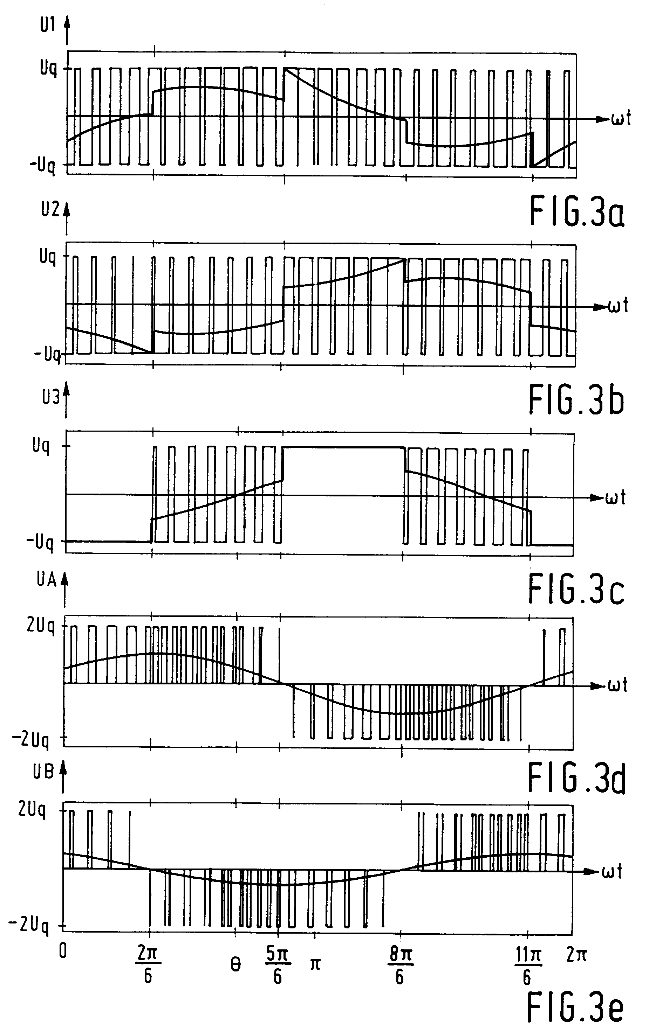

Fig. 1 zeigt schematisch ein Schaltbild für eine Schaltungsanordnung, mit der in vorteilhafter Weise die Speisung des Zweiphasen-Asynchronmotors gemäß den Diagrammen nach Fig. 2 und 3, insbesondere jedoch nach Fig. 3, vorgenommen werden kann. Diese Schaltungsanordnung umfaßt eine Gleichspannungsquelle 1, die in Fig. 1 der Einfachheit halber als Reihenschaltung zweier je eine Gleichspannung Uq abgebender Quellen dargestellt ist, deren Verbindungspunkt mit Masse 2 gekoppelt ist. An ihren Polen 3 bzw. 4 gibt die Gleichspannungsquelle 1 bezogen auf das Massepotential (Potential an Masse 2) eine positive Spannung UQ bzw. eine negative Spannung - UQ ab. Die Gleichspannungsquelle 1 kann mit einem Netzgleichrichter, einem Schaltnetzteil einer Batterie o.dgl. ausgestaltet sein.

Mit den Polen 3, 4 der Gleichspannungsquelle 1 sind Endpunkte dreier Schalterstrecken 5, 6 bzw. 7 verbunden, die aus je zwei in Reihe angeordneten Schalterstufen 8, 9; 10, 11 bzw. 12, 13 bestehen. Jede der Schalterstufen 8 bis 13 ist im Ausführungsbeispiel nach Fig. 1 aus einem Feldeffekttransistor aufgebaut, dessen Source-Drain-Strecke einen Strompfad für den Zweiphasen-Asynchronmotor zuzuführende Ströme bildet. Dazu ist in jeder der Schalterstrecken 5, 6 bzw. 7 der Drain-Anschluß des Feldeffekttransistors der ersten Schalterstufen 8, 10 bzw. 12 mit dem positiven Pol 3 der Gleichspannungsquelle 1 und der Source-Anschluß der zweiten Schalterstufen 9, 11 bzw. 13 mit dem negativen Pol 4 der Gleichspannungsquelle 1 verbunden. In jeder der Schalterstrecken 5, 6 bzw. 7 sind außerdem der Source-Anschluß des Feldeffekttransistors der ersten Schalterstufe 8, 10 bzw. 12 mit dem Drain-Anschluß der zugehörigen zweiten Schalterstufe 9, 11 bzw. 13 verbunden. Die letztgenannte Verbindung bildet einen ersten, zweiten bzw. dritten Anschlußpunkt 14, 15 bzw. 16. Zwischen dem ersten Anschlußpunkt 14 und dem dritten Anschlußpunkt 16 ist eine Hauptwicklung 17, zwischen dem zweiten Anschlußpunkt 15 und dem dritten Anschlußpunkt 16 eine Hilfswicklung 18 des Zweiphasen-Asynchronmotors angeschlossen.

Den Schalterstrecken 5, 6 bzw. 7 obliegt die Aufgabe, den Anschlußpunkten 14, 15 bzw. 16 drei Wechselspannungen U1, U2 bzw. U3 zuzuführen. Die Differenz aus der ersten Wechselspannung U1 am ersten Anschlußpunkt 14 und der dritten Wechselspannung 3 am dritten Anschlußpunkt 16 bildet eine Spannung UA an der Hauptwicklung 17, die Differenz aus der zweiten Wechselspannung 2 am zweiten Anschlußpunkt 15 und der dritten Wechselspannung U3 am dritten Anschlußpunkt 16 eine Spannung UB an der Hilfswicklung 18. Durch entsprechende Steuerung der Schalterstufen 8 bis 13 werden dabei unterschiedliche, zeitliche Verläufe für die Wechselspannungen U1 bis U3 erzeugt. Dabei stellt die Schaltungsanorndung nach Fig. 1 nur eine von mehreren, gleichwertigen Möglichkeiten dar; beispielsweise kann eine Speisung des Zweiphasen-Asynchronmotors mit drei sinusförmigen Wechselspannungen auch unmittelbar durch drei geeignet gewählte Wechselspannungsquellen erfolgen.

Das Diagramm nach Fig. 2 zeigt zeitliche Verläufe der drei Wechselspannungen U1 bis U3 sowie der Spannungen UA und UB an den Wicklungen 17 und 18 bei einer Speisung des Zweiphasen-Asynchronmotors mit sinusförmigen Wechselspannungen. Diese sinusförmigen Wechselspannungen U1 bis U3 sind in Fig. 2d) gemeinsam dargestellt und dort phasenrichtig aufgetragen, so daß ihre gegenseitigen Phasenlagen erkennbar sind. Die dem zweiten Anschlußpunkt 15 zugeführte Wechselspannung U2 ist gegenüber der dem ersten Anschlußpunkt 14 zugeführten Wechselspannung U1 um eine halbe Periode, d.h. einen Phasenwinkel von 180°, verschoben. Somit sind die Wechselspannungen U1 und U2 gegenphasig. Der Phasenwinkel der dem dritten Anschlußpunkt 16 zugeführten Wechselspannung U3 ist demgegenüber beliebig vorgebbar. Im in Fig. 2 dargestellten Fall wurde eine Phasenverschiebung δ gegenüber der ersten Wechselspannung U1 von 120° gewählt. Dadurch ergeben sich für die Darstellung vereinfachte Verhältnisse; es kann jedoch auch jeder andere, beliebige Wert für den Phasenwinkel δ angesetzt werden.

Die in Fig. 2d) dargestellten Wechselspannungen U1 bis U3 weisen übereinstimmend die Amplitude û auf und sind über der Zeit aufgetragen, wobei allerdings als Bezeichnung der Zeitachse die Phase ωt gewählt wurde. Diese sinusförmigen Verläufe der Wechselspannungen U1 bis U3 werden im folgenden auch als Grundschwingungen bezeichnet, auf die bei davon abweichenden Zeitfunktionen der Wechselspannungen anderer Ausführungsbeispiele für die Speisung des Zweiphasen-Asynchronmotors bezug genommen wird.

In Fig. 2d) sind die Zeitintervalle, in denen die sinusförmige Wechselspannung U3 (d.h. die Grundschwingung größer bzw. kleiner ist als die Wechselspannungen U1 und U2, im Gegensatz zu den übrigen Zeitabschnitten mit einer dicken Vollinie ausgezogen. Es handelt sich dabei um die Zeitintervalle bzw. die damit korrespondierenden Phasen ωt zwischen 0 und 2π/6, zwischen 5π/6 und 8π/6 sowie zwischen 11π/6 und 2π, periodisch mit 2π fortgesetzt. In diesen Zeitintervallen wird nun gemäß der Erfindung der sinusförmige Verlauf der dritten Wechselspannung U3 ersetzt durch eine Spannung mit einem konstanten Pegel Uq bzw. -Uq, so daß sich die in Fig. 2c) dargestellten Verläufe ergeben. Zum vergleich ist die sinusförmige Grundschwingung für die Wechselspannung U3 gestrichelt eingezeichnet. In dem Zeitintervall, in dem die Grundschwingung der dritten Wechselspannung U3 größer ist als die Grundschwingungen der beiden anderen Wechselspannungen, wird die dritte Wechselspannung U3 erfindungsgemäß auf einen positiven Pegel gesetzt, wohingegen sie in den Zeitintervallen, in denen die Grundschwingung der dritten Wechselspannung U3 kleiner ist als die Grundschwingungen der übrigen Wechselspannungen, auf einen negativen Pegel -Uq gesetzt wird.

Zwar können für die Speisung des Zweiphasen-Asynchronmotors die Wechselspannungen U1, U2 weiterhin unverändert bleiben, jedoch führt dies zu veränderten, zeitlichen Verläufen für die Spannungen UA, UB an den Wicklungen 17, 18. Diese Spannungen UA, UB sind für den Fall einer Speisung des Zweiphasen-Asynchronmotors mit ungestörten, sinusförmigen Grundschwingungen U1 bis U3 in Fig. 2e) beispielhaft wiedergegeben. Für die in diesem Ausführungsbeispiel gewählte Phasenverschiebung δ von 120° zwischen U1 und U3 erhält man für die Spannung UA an der Hauptwicklung 17 einen sinusförmigen Verlauf mit einer Phasenvoreilung gegenüber der Wechselspannung U1 von π/6 und einer Amplitude, die der Amplitude û der Wechselspannungen U1 bis U3, multipliziert mit der Quadratwurzel aus der Zahl 3, entspricht, wohingegen die Spannung UB an der Hilfswicklung 18 der ersten Wechselspannung U1 um 2π/6 entsprechend 120° voreilt und die Amplitude û aufweist. Diese Verläufe sind in Fig. 2e) dargestellt.

Wird nun erfindungsgemäß der Verlauf der dritten Wechselspannung U3 gemäß Fig. 2c) gewählt, ändern sich auch die zeitlichen Verläufe der Spannungen UA und UB. Dies kann jedoch zu unerwünschten Einflüssen auf den Betrieb des Zweiphasen-Asynchronmotors führen. Um diese Einflüsse zu eleminieren, werden den Wechselspannungen U1 und U2 Verzerrungsspannungen überlagert, die der Differenz zwischen dem erfindungsgemäßen Verlauf der dritten Wechselspannung U3 und ihrer sinusförmigen Grundschwingung entsprechen und sich somit bei der Bildung der Spannungen UA und UB gegen die Veränderung der dritten Wechselspannung U3 aufheben. Damit bleiben die zeitlichen Verläufe der Spannungen UA, UB unverändert und entsprechen auch weiterhin für das gewählte Beispiel der Fig. 2e). Die mit den Verzerrungsspannungen überlagerten Wechselspannungen U1, U2 sind in den Fig. 2a) und 2b) für das gewählte Beispiel der Speisung mit Wechselspannungen mit sinusförmigen Grundschwingungen gemäß Fig. 2d) dargestellt.

Im vorliegenden Beispiel beträgt die Amplitude û der Wechselspannungen U1 bis U3 die Hälfte der Gleichspannung Uq. Dieser Wert ist willkürlich gewählt und kann, solange die Wechselspannungen U1 bis U3 mit einer Schaltungsanordnung gemäß Fig. 1 aus der Gleichspannungsquelle 1 abgeleitet werden, beliebig zwischen 0 und dem Wert Uq vorgegeben werden. In jedem Fall wird aber der Spitzenwert der Spannungen U1 bis U3 auch nach Überlagerung der Verzerrungsspannungen die Grenzen Uq bzw.-Uq nicht über- bzw. unterschreiten. Damit kann die Speisung des Zweiphasen-Asynchronmotors mit den Spannungen gemäß Fig. 2 weiterhin aus der Gleichspannungsquelle 1 vorgenommen werden. Es ist dafür lediglich eine entsprechende Ansteuerung der Schalterstufen 8 bis 13, nicht jedoch eine zusätzliche Versorgungsquelle erforderlich.

Fig. 3 zeigt als weiteres Ausführungsbeispiel die über der Phase ωt aufgetragenen Verläufe der drei Wechselspannungen U1, U2 und U3 sowie der Spannungen UA, UB an den Wicklungen des Zweiphasen-Asynchronmotors für den Fall einer Speisung mit pulsweitenmodulierten Rechteckspannungen. Diese Speisung kann in vorteilhafter Weise mit einer Schaltungsanordnung gemäß Fig. 1 durchgeführt werden. Dabei werden die Anschlußpunkte 14, 15 bzw. 16 über die Schalterstufen 8 bis 13 wechselweise mit dem positiven Pol 3 und dem negativen Pol 4 der Gleichspannungsquelle 1 verbunden, so daß an ihnen wechselweise eine Spannung UQ bzw. -UQ anliegt. Über das Tastverhältnis dieses Umschaltens zwischen den beiden Spannungen an den Polen 3, 4 der Gleichspannungsquelle 1, d.h. über den Modulationsgrad der pulsweitenmodulierten Rechteckspannung, kann der Mittelwert der Rechteckspannung, jeweils berechnet über eine Periode des Hin- und Herschaltens zwischen den Spannungen UQ und -UQ, vorgegeben werden. Im Beispiel nach Fig. 3 ist der Modulationsgrad auf den Wert 0,6 festgelegt. Die Pulsweitenmodulation erfolgt grundsätzlich gemäß einer sinusförmigen Grundschwingung für die drei Wechselspannungen U1, U2 und U3. Für diese Grundschwingungen wurden wieder die Phasenbeziehungen gemäß Fig. 2d) zugrundegelegt.

In Abweichung von der rein sinusförmigen Pulsweitenmodulation der Wechselspannungen U1 bis U3 ist in Fig. 3a) ein zeitlicher Verlauf für die dritte Wechselspannung U3 dargestellt, wie er sich gemäß der Erfindung ergibt. Danach sind in den Zeitintervallen, die bereits anhand der Fig. 2d) definiert wurden, die die Rechteckspannung erzeugenden Schaltvorgänge unterbrochen worden, und die dritte Wechselspannung U3 nimmt in diesen Zeitintervallen einen konstanten Pegel UQ bzw. -UQ ein. In diesen Zeitintervallen entspricht dann der über jeweils eine Periode der Rechteckspannungen berechnete Mittelwert nicht mehr einem sinusförmigen Verlauf, sondern dem eingeschalteten, konstanten Pegel. Die sich durch diese Mittelung ergebende Spannung ist ebenfalls in das Diagramm für die Wechselspannung U3 gemäß Fig. 3c) eingezeichnet wird. Sie entspricht in ihrem Verlauf der Wechselspannung U3 gemäß Fig. 2c), da die Speisung mit dem pulsweitenmodulierten Rechteckspannungen gerade so gewählt wurde, daß sich im kurzzeitigen Mittel genau wieder die sinusförmige Speisung ergibt.

Um jedoch wieder auch für die Speisung mit pulsweitenmodulierten Rechteckspannungen im kurzzeitigen Mittel stetige Sinusverläufe für die Spannungen UA und UB an den Wicklungen des Zweiphasen-Asynchronmotors zu erhalten, wurde die Pulsweitenmodulation der rechteckförmigen Spannungen U1 und U2 gemäß Fig. 3a) und b) entsprechend den bereits anhand Fig. 2a) und b) erläuerten Verzerrungsspannungen verändert. Für die kurzzeitigen Mittel dieser Spannungen U1 und U2 ergeben sich die ebenfalls in Fig. 3a) und b) eingezeichneten Verläufe, die wiederum den entsprechenden Verläufen bei Speisung mit linearen, kontinuierlichen Wechselspannungen entsprechen, d.h. die in Fig. 2a) und b) dargestellten Verläufe.

Die Fig. 3d) und e) zeigen die aus der Speisung mit den impulsweitenmodulierten Rechteckspannungen U1 bis U3 resultierenden, rechteckförmigen Spannungen UA an der Hauptwicklung 17 bzw. UB an der Hilfswicklung 18 des Zweiphasen-Asynchronmotors. Eingezeichnet sind in diese Diagramme ferner die kurzzeitigen Mittel der Rechteckspannungen, die stetige Sinusfunktionen darstellen. Diese entsprechen wieder den Verläufen gemäß Fig. 2e).

Aus dem Vergleich der Fig. 3a) und b) einerseits sowie c) andererseits ist erkennbar, daß die Zahl der Schaltvorgänge, d.h. der Wechsel der Rechteckspannung von einem Pegel zum anderen, für die Wechselspannung U3 nur noch etwa die Hälfte der Anzahl der Schaltvorgänge bei den Wechselspannungen U1 und U2 beträgt. Dadurch werden die Schaltverluste in der gemeinsam benutzten dritten Schalterstrecke 7 deutlich reduziert, wodurch ein Ausgleich für hier auftretende, durch einen erhöhten Stromfluß erhöhte Durchlaßverluste geschaffen wird. Insgesamt kann dadurch die thermische Belastung der drei Schalterstrecken 5, 6, 7 gleichmäßiger verteilt und somit eine entsprechend wirtschaftlichere Dimensionierung der Schalterstrecken gewählt werden.

## Patentansprüche

1. Schaltungsanordnung zum Speisen eines Zweiphasen-Asynchronmotors mit zwei Wicklungen (17, 18), die einerseits mit je einem (14, 15) und andererseits gemeinsam mit einem dritten Anschlußpunkt (16) verbunden sind, wobei den Anschlußpunkten (14, 15, 16) je eine von drei in der Frequenz ihrer sinusförmigen Grundschwingungen wenigstens weitgehend übereinstimmenden Wechselspannungen (U1, U2, U3) zuführbar ist,
**dadurch gekennzeichnet**, daß die dem dritten Anschlußpunkt (16) zuzuführende Wechselspannung (U3) in vorgebbaren, periodisch wiederkehrenden Zeitintervallen (0 bis 2π/6, 5π/6 bis 8π/6, 11π/6 bis 2π) konstante Pegel (+Uq, -Uq) annimmt.

2. Schaltungsanordnung nach Anspruch 1,
**dadurch gekennzeichnet**, daß die Wechselspannungen (U1, U2, U3) im wesentlichen als pulsweitenmodulierte Rechteckspannungen (Fig. 3) ausgebildet sind, wobei die dem dritten Anschlußpunkt (16) zuzuführende Wechselspannung (U3) in den vorgebbaren, periodisch wiederkehrenden Zeitintervallen (0 bis 2π/6, 5π/6 bis 8π/6, 11π/6 bis 2π) die Pulsweitenmodulation unterbrechende, konstante Pegel (+Uq, -Uq) annimmt.

3. Schaltungsanordnung nach Anspruch 2,
**dadurch gekennzeichnet**, daß die konstanten Pegel (+Uq, -Uq) den Spitzenwerten der pulsweitenmodulierten Rechteckspannungen (U1, U2, U3) entsprechen.

4. Schaltungsanordnung nach einem der vorhergehenden Ansprüche,
**dadurch gekennzeichnet**, daß die dem dritten Anschlußpunkt (16) zuzuführende Wechselspannung (U3) einen positiven (+Uq) bzw. negativen konstanten Pegel (-Uq) in den Zeitintervallen (0 bis 2π/6 und 11π/6 bis 2π bzw. 5π/6 bis 8π/6) annimmt, in denen die sinusförmige Grundschwingung der Wechselspannung am dritten Anschlußpunkt (16) größer bzw. kleiner ist als die sinusförmigen Grundschwingungen der Wechselspannungen (U1, U2) an den beiden anderen Anschlußpunkten (14, 15).

5. Schaltungsanordnung nach einem der vorhergehenden Ansprüche,
**dadurch gekennzeichnet**, daß die den beiden ersten Anschlußpunkten (14, 15) zuzuführenden Wechselspannungen (U1, U2) bezüglich ihrer sinusförmigen Grundschwingung gegenphasig sind und der Phasenwinkel Θ der dem dritten Anschlußpunkt (16) zuzuführenden Wechselspannung (U3) demgegenüber beliebig vorgebbar ist.

6. Schaltungsanordnung nach einem der vorhergehenden Ansprüche,
**dadurch gekennzeichnet**, daß den den beiden ersten Anschlußpunkten (14, 15) zuzuführenden Wechselspannungen (U1, U2) je eine Verzerrungsspannung überlagert ist, die der durch die Einfügung konstanter Pegel (+Uq, -Uq) in die dem dritten Anschlußpunkt (16) zuzuführenden Spannung (U3) hervorgerufenen Veränderung des Spannungsverlaufs derart entspricht, daß der Einfluß dieser Veränderung auf die an die Wicklungen (17, 18) anzulegenden Spannungen (UA, UB) kompensiert ist.

## Claims

1. A circuit arrangement for powering a two-phase asynchronous motor comprising two windings (17, 18) which each have one end connected to one node (14, 15) and which both have another end connected to a third node (16), the nodes (14, 15, 16) each being arranged to receive one of three alternating voltages (U1, U2, U3) whose sinusoidal fundamental waves at least substantially correspond in frequency, **characterized in that** the alternating voltage (U3) to be applied to the third node (16) assumes constant levels (+Uq, -Uq) in given periodically recurring time intervals (0 to 2π/6, 5π/6 to 8π/6, 11π/6 to 2π).

2. A circuit arrangement as claimed in Claim 1, **characterized in that** the alternating voltages (U1, U2, U3) are essentially pulse-width modulated rectangular voltages (Fig. 3), the alternating voltage (U3) to be applied to the third node (16) assuming constant levels (+Uq, -Uq), which interrupt the pulse-width modulation, in the given periodically recurring time intervals (0 to 2π/6, 5π/6 to 8π/6, 11π/6 to 2π).

3. A circuit arrangement as claimed in Claim 2, **characterized in that** the constant levels (+Uq, -Uq) correspond to the peak values of the pulse-width modulated rectangular voltages (U1, U2, U3).

4. A circuit arrangement as claimed in any one of the preceding Claims, **characterized in that** the alternating voltage (U3) to be applied to the third node (16) assumes a positive (+Uq) or a negative (-Uq) constant level in the time intervals (0 to 2π/6, 11π/6 to 2π, 5π/6 to 8π/6, respectively) in which the sinusoidal fundamental wave of the alternating voltage on the third node (16) is larger and smaller, respectively, than the sinusoidal fundamental waves of the alternating voltages (U1, U2) on the two other nodes (14, 15).

5. A circuit arrangement as claimed in any one of the preceding Claims, **characterized in that** the sinusoidal fundamental waves of the alternating voltages (U1, U2) to be applied to the first two nodes (14, 15) are in phase opposition and, conversely, the phase angle θ of the alternating voltage (U3) to be applied to the third node (16) can be given an arbitrary value.

6. A circuit arrangement as claimed in any one of the preceding Claims, **characterized in that** a compensation voltage is superposed on each of the alternating voltages (U1, U2) to be applied to the first two nodes (14, 15), which compensation voltage corresponds to the change of the voltage waveform caused by the insertion of constant levels (+Uq, -Uq) into the voltage (U3) to be applied to the third node (16), so as to compensate for the influence of this change on the voltages (UA, UB) to be applied to the windings (17, 18).

## Revendications

1. Circuit d'alimentation d'un moteur asynchrone à deux phases avec deux bobines (17, 18) qui sont reliées, d'une part, chacune à un point de connexion (14, 15) et, d'autre part, conjointement à un troisième point de connexion (16), l'une des trois tensions alternatives (Ul, U2, U3) qui coïncident, du moins en grande partie, par la fréquence de leurs modes fondamentaux sinusoïdaux pouvant alimenter respectivement les points de connexion (14, 15, 16), caractérisé en ce que la tension alternative (U3) alimentant le troisième point de connexion (16) adopte un niveau constant (+Uq, -Uq) dans des intervalles de temps (0 à 2π/6, 5π/6 à 8π/6, 11π/6 à 2π) récurrents périodiquement à prédéterminer.

2. Circuit selon la revendication 1, caractérisé en ce que les tensions alternatives (U1, U2, U3) sont conçues essentiellement comme des tensions rectangulaires modulées quant à leur largeur d'impulsion (Fig 3), la tension alternative (U3) alimentant le troisième point de connexion (16) adoptant dans les intervalles de temps (0 à 2π/6, 5π/6 à 8π/6, 11π/6 à 2π) récurrents périodiquement à prédéterminer un niveau constant (+Uq, -Uq) interrompant la modulation de la largeur d'impulsion.

3. Circuit selon la revendication 2, caractérisé en ce que les niveaux constants (+Uq, -Uq) correspondent aux valeurs de pointe des tensions rectangulaires (U1, U2, U3) modulées quant à leur largeur d'impulsion.

4. Circuit selon l'une des revendications précédentes, caractérisé en ce que la tension alternative (U3) alimentant le troisième point de connexion (16) adopte un niveau constant positif (+Uq) ou négatif (-Uq) dans les intervalles de temps (0 à 2π/6 et 11π/6 à 2π ou 5π/6 à 8π/6) dans lesquels le mode fondamental sinusoïdal de la tension alternative à hauteur du troisième point de connexion (16) est supérieur ou inférieur aux modes fondamentaux sinusoïdaux des tensions alternatives (U1, U2) aux deux autres points de connexion (14, 15).

5. Circuit selon l'une des revendications précédentes, caractérisé en ce que les tensions alternatives (U1, U2) alimentant les deux premiers points de connexion (14, 15) sont en opposition de phase par rapport à leur mode fondamental sinusoïdal et l'angle de phase θ de la tension alternative (U3) alimentant le troisième point de connexion (16) peut être déterminé arbitrairement.

6. Circuit selon l'une des revendications précédentes, caractérisé en ce qu'une tension de distorsion est respectivement superposée aux tensions alternatives (U1, U2) alimentant les deux premiers points de connexion (14, 15), laquelle correspond à la variation du profil de tension provoquée par l'introduction de niveaux constants (+Uq, -Uq) dans la tension alimentant le troisième point de connexion (16) de telle sorte que l'influence de cette variation soit compensée sur les tensions (UA, UB) à appliquer sur les bobines (17, 18).
